# FASCICULE DE BREVET EUROPEEN

(11) **EP 3 541 538 B1**
(45) Date de publication et mention de la délivrance du brevet: **04.12.2024**
(21) Numéro de dépôt: 17798242.8
(22) Date de dépôt: 17.11.2017
(51) Int. Cl.: B08B 17/02, B60S 1/56, B60R 11/04, G03B 17/02

(54) **DISPOSITIF DE PROTECTION D'UN CAPTEUR OPTIQUE, SYSTÈME D'ASSISTANCE À LA CONDUITE ET PROCÉDÉ DE NETTOYAGE ASSOCIÉS**
VORRICHTUNG ZUM SCHUTZ EINES OPTISCHEN SENSORS UND ZUGEHÖRIGES FAHRERASSISTENZSYSTEM UND REINIGUNGSVERFAHREN
DEVICE FOR PROTECTING AN OPTICAL SENSOR, AND ASSOCIATED DRIVER ASSISTANCE SYSTEM AND CLEANING METHOD

(30) Priorité: 17.11.2016 FR 1661121
(43) Date de publication de la demande: 25.09.2019
(73) Titulaire: Valeo Systèmes d'Essuyage, 78322 Le Mesnil Saint Denis (FR)
(72) Inventeur: BRETAGNOL, Frédéric, 63500 Issoire (FR); GRASSO, Giuseppe, 63500 Issoire (FR); KOLANOWSKI, Grégory, 63500 Issoire (FR); TREBOUET, Marcel, 78322 Le Mesnil Saint Denis (FR)
(74) Mandataire: Valeo Visibility
(86) Numéro de dépôt international: PCT/EP2017/079565
(87) Numéro de publication internationale: WO 2018/091641

(56) Documents cités:
- KR-A- 20070 034 729
- US-A1- 2011 181 725

## Description

La présente invention se rapporte au domaine de l'aide à la conduite et notamment aux systèmes d'assistance à la conduite, implantés sur certains véhicules, le système d'assistance à la conduite pouvant comporter un capteur optique, comme par exemple une caméra comprenant une lentille. Plus particulièrement, l'invention concerne un dispositif de protection d'un tel capteur optique. L'invention concerne également un procédé de nettoyage d'un élément optique d'un tel dispositif de protection.

Actuellement, des caméras de vision avant, arrière, ou encore latérales équipent un grand nombre de véhicules automobiles. Elles font notamment partie de systèmes d'assistance à la conduite, tels que des systèmes d'aide au stationnement, ou encore des systèmes de détection de franchissement de ligne.

On connait des caméras qui sont installées à l'intérieur de l'habitacle d'un véhicule contre la lunette / vitre arrière en visant vers l'arrière depuis la lunette arrière du véhicule. Ces caméras sont bien protégées des aléas climatiques extérieurs et des salissures causées par des polluants organiques ou minéraux. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère donc installer les caméras des systèmes d'assistance à la conduite, à l'extérieur des véhicules à différents endroits selon l'utilisation souhaitée, par exemple au niveau du pare-chocs arrière ou avant, ou au niveau de la plaque d'immatriculation arrière ou avant du véhicule. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de pluie et de saletés qui peuvent grandement affecter l'opérabilité du système d'assistance à la conduite comprenant une telle caméra. Les surfaces des optiques des caméras doivent être nettoyées afin de garantir leur bon état de fonctionnement.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps. Cependant, l'utilisation de ces gicleurs entraine une augmentation des coûts de fonctionnement d'un tel système d'assistance à la conduite car ils nécessitent l'utilisation de quantités de liquide de nettoyage assez importantes. En outre, l'optique de la caméra, qui est un élément relativement fragile, n'est pas protégée de projections pouvant l'endommager.

II est aussi connu de monter la caméra à l'intérieur de l'habillage externe du véhicule, et de la protéger des agressions extérieures par l'intermédiaire d'une vitre ou fenêtre de protection fixée à l'habillage et agencée en regard de la lentille. Bien que la caméra soit protégée des agressions extérieures, la vitre ou fenêtre de protection reste soumise au dépôt de polluants.

Selon une solution connue, des moyens de vibration de la vitre de protection faisant face à la caméra sont prévus afin de décoller les saletés de la vitre de protection de la caméra. Toutefois, il a été constaté que l'efficacité d'un tel dispositif pour des salissures tenaces et incrustées peut être limitée malgré la vibration de la vitre de protection.

Selon une autre solution, le dispositif de protection comprend un boitier, dans lequel la caméra est agencée, et un couvercle rotatif fermant ce boitier et dont l'axe de rotation est excentré par rapport à l'axe optique de la caméra. Le dispositif de protection comprend également un balai d'essuie-glace.

Cependant, un tel dispositif de protection peut être bruyant si le couvercle est mis en rotation à des vitesses élevées, notamment à cause des frottements entre le couvercle et le balai d'essuie-glace. Par ailleurs, le balai d'essuie-glace peut présenter une usure prématurée du fait de la rotation continue à vitesse assez élevée du couvercle. D'autre part, un tel dispositif de protection peut être assez encombrant à installer, car le couvercle rotatif est excentré par rapport au capteur optique et présente un diamètre au moins deux fois supérieur au diamètre de l'optique du capteur optique qu'il protège et dont il assure une bonne opérabilité. Ensuite, il est possible que des micro-rayures apparaissent sur le couvercle si des particules solides se déposent entre l'essuie-glace et le couvercle rotatif. De ce fait, le champ de vision et la qualité des images prises par le capteur optique peuvent être affectés. Enfin, l'utilisation d'un tel système de protection ne permet pas d'avoir un grand angle de vision, du fait de l'agencement du capteur optique à l'intérieur du boitier portant le couvercle, sans faire saillie de ce boitier.

D'autres exemples de dispositifs de protection de capteurs optiques sont décrits dans les documents US2011181725 et KR20070034729A qui décrivent tout deux des dispositifs selon le préambule de la revendication 1.

La présente invention se propose de remédier au moins partiellement aux inconvénients ci-dessus mentionnés en présentant une alternative d'un dispositif de protection d'un capteur optique permettant d'empêcher le dépôt de salissures sur le capteur optique tel qu'une caméra tout en conservant un grand angle de vision.

À cet effet l'invention a pour objet un dispositif de protection d'un capteur optique pour véhicule automobile.

Selon l'invention, le dispositif de protection comporte :
- un élément optique transparent monté mobile en rotation autour d'un axe de rotation, ledit élément optique étant configuré pour être disposé en amont d'une optique du capteur optique de sorte que l'axe de rotation dudit élément optique soit confondu avec l'axe optique du capteur optique, et
- un moteur comprenant un arbre rotatif configuré pour tourner autour d'un axe de rotation, le moteur étant configuré pour entrainer en rotation ledit élément optique tel que l'axe de rotation dudit élément optique est en outre confondu avec l'axe de rotation de l'arbre rotatif du moteur, le moteur étant agencé du côté opposé audit élément optique.

Un tel dispositif de protection peut être installé sur un capteur optique destiné à être installé à l'intérieur d'un élément de carrosserie du véhicule, ou encore à l'extérieur du véhicule, tout en permettant au capteur optique de conserver un grand angle de vision.

Lorsqu'il pleut ou par temps sec, des salissures peuvent se déposer sur l'élément optique. On entend par « salissures » aussi bien des gouttes d'eau que des polluants organiques ou minéraux. Lorsque le boitier et l'élément optique sont entrainés en rotation par le moteur, les salissures éventuelles sont éjectées par effet centrifuge. En effet, le travail de la force centrifuge ainsi provoquée est supérieur à la force d'adhésion des salissures sur l'élément optique. La rotation de l'élément optique permet donc un nettoyage de cet élément optique par effet centrifuge.

Ainsi, le capteur optique conserve une bonne opérabilité et son encrassement est limité quelles que soient les conditions climatiques.

Ledit dispositif de protection du capteur optique peut en outre comporter une ou plusieurs caractéristiques suivantes, prises séparément ou en combinaison :
- le moteur est creux et est configuré pour recevoir au moins en partie le capteur optique ;
- le moteur est configuré pour recevoir plus particulièrement dans sa partie creuse une partie arrière du capteur optique ; on entend par partie arrière du capteur optique une partie disposée à l'opposé de l'élément optique ; notamment, le capteur optique peut comporter un corps principal, dans lequel sont logés les composants optiques et électroniques aptes à réaliser la fonction optique appropriée, et une partie de connectique agencée dans le prolongement axial du corps principal pour loger des moyens de raccordement de ces composants, et le moteur est configuré pour recevoir dans sa partie creuse la partie de connectique ; ainsi, il est possible de prévoir un moteur de taille standard apte à coopérer avec des capteurs optiques dont la forme et la dimension du corps principal varient d'un dispositif à l'autre ;
- ledit élément optique est agencé à l'avant du dispositif de protection de façon à faire face à une scène de route dont le capteur optique est configuré pour participer à la prise de vues ;
- ledit élément optique est disposé de façon centrée par rapport à son axe de rotation ;
- ledit élément optique est formé par une partie du capteur optique ;
- ledit élément optique est distinct du capteur optique ;
- le dispositif de protection comporte un boitier présentant un logement configuré pour recevoir le capteur optique ;
- le boitier est solidaire de l'arbre rotatif du moteur ;
- le logement est défini par une paroi du boitier ;
- le boitier comporte au moins un orifice traversant ;
- le dispositif de protection comprend une plaque de fixation et un roulement de forme générale sensiblement annulaire disposé entre ledit élément optique et la plaque de fixation ;
- ledit élément optique présente une surface interne ayant une propriété antibuée, en particulier la surface interne dudit élément optique présente un revêtement antibuée ;
- ledit élément optique présente au moins un orifice traversant ;
- ledit élément optique présente une surface externe ayant au moins une propriété choisie dans la liste suivante : filtre infrarouge, photocatalytique, hydrophobe, super hydrophobe, lipophobe, hydrophile, super hydrophile, résistance aux gravillons.

L'invention concerne également un système d'assistance à la conduite comprenant un capteur optique et un dispositif de protection du capteur optique tel que défini précédemment.

Selon un aspect de l'invention, le système d'assistance à la conduite comprend en outre :
- un moyen de détection tel qu'un capteur capacitif configuré pour détecter l'approche d'un objet à proximité dudit élément optique, et
- un moyen d'inhibition de la rotation dudit élément optique à détection de l'approche d'un objet à proximité dudit élément optique.

L'invention concerne encore un procédé de nettoyage d'un élément optique d'un dispositif de protection d'un capteur optique tel que défini précédemment, ledit procédé comprenant au moins une étape d'entrainement en rotation dudit élément optique pour un nettoyage dudit élément optique par effet centrifuge.

Selon un aspect de l'invention, ledit procédé comporte au moins deux étapes de nettoyage avec une vitesse de rotation dudit élément optique différente pour chaque étape.

D'autres caractéristiques et avantages de l'invention apparaitront plus clairement à la lecture de la description suivante, donnée à titre d'exemple illustratif et non limitatif, et des dessins annexés parmi lesquels :
- la figure 1 représente de façon schématique un véhicule automobile comprenant un système d'assistance à la conduite selon l'invention,
- la figure 2a est une vue en coupe longitudinale partielle d'un dispositif de protection d'un capteur optique du système d'assistance de la figure 1,
- la figure 2b est une vue éclatée du dispositif de protection d'un capteur optique de la figure 2a,
- la figure 3 est une vue avant et en perspective du dispositif de protection du capteur optique de la figure 2a,
- la figure 4 est une vue arrière et en perspective du dispositif de protection du capteur optique de la figure 2a,
- la figure 5 est une vue en coupe d'un élément optique du dispositif de protection, et
- la figure 6 est une vue de face du dispositif de protection du capteur optique selon une variante avec une buse de projection de fluide de nettoyage.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

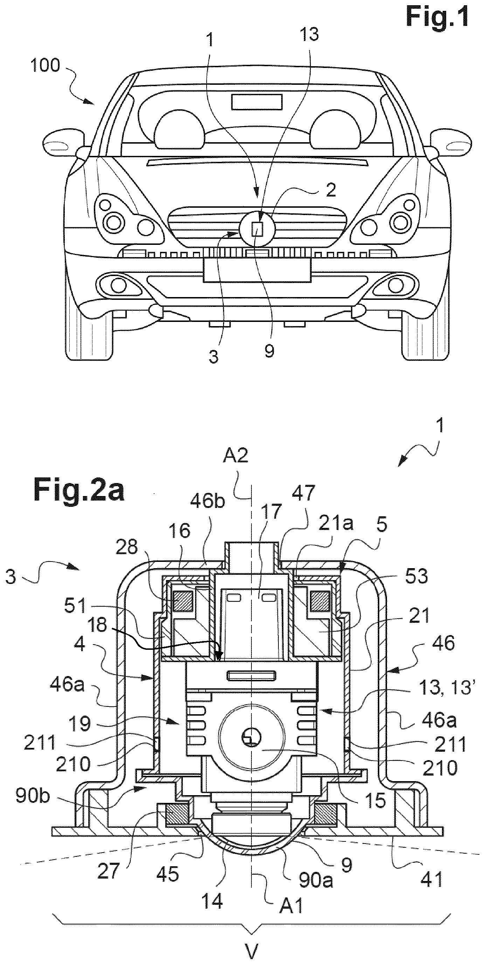

La figure 1 montre un véhicule automobile 100 équipé d'au moins un système d'assistance à la conduite 1 selon l'invention.

Le système d'assistance à la conduite 1 comporte notamment au moins un capteur optique 13 et un dispositif de protection 3 du capteur optique 13.

Le capteur optique 13 est par exemple un capteur optique 13 de prise de vues tel qu'une caméra. Il peut s'agir d'un capteur CCD (pour "charged coupled device" en anglais à savoir un dispositif à transfert de charge) ou d'un capteur CMOS comportant une matrice de photodiodes miniatures. Selon une autre variante, il peut s'agir d'un capteur pour télédétection par laser dit capteur LIDAR, acronyme en anglais de "light détection and ranging".

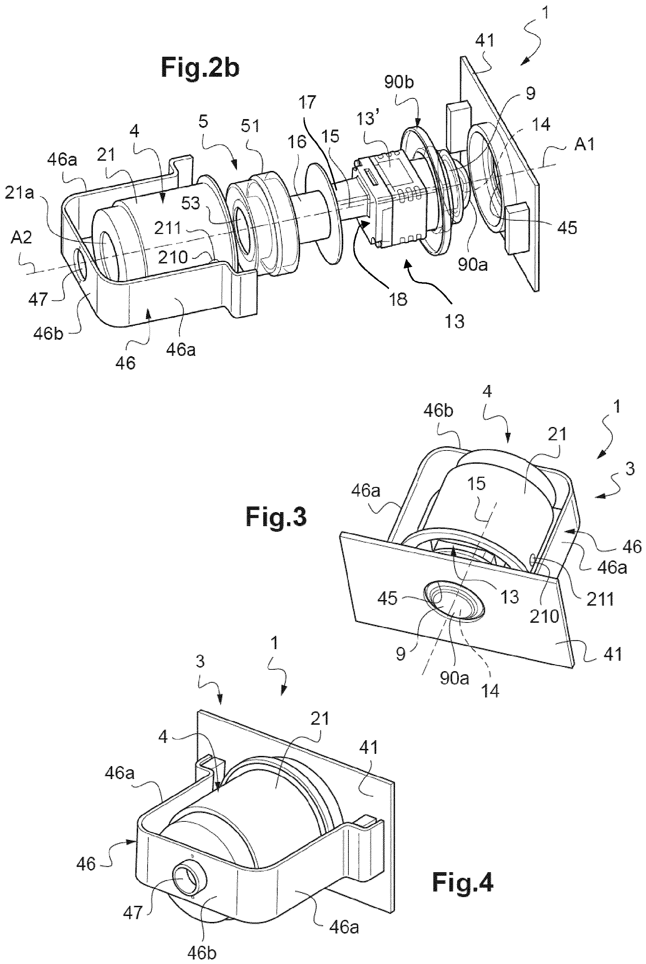

Comme cela est mieux visible sur les figures 2a et 2b, le capteur optique 13 comporte une optique 14 d'axe optique 15. L'optique 14 est par exemple une lentille. Cette optique 14 est par exemple convexe (bombée) de convexité orientée vers l'extérieur du capteur optique 13, telle qu'une optique dite oeil de poisson ("fish-eye" en anglais).

Le capteur optique 13 comporte un corps principal 13', dans lequel sont logés les composants optiques et électroniques aptes à réaliser la fonction optique appropriée, et une partie de connectique 17 agencée dans le prolongement axial du corps principal pour loger des moyens de raccordement de ces composants, la partie de connectique prolongeant ce corps principal vers l'arrière, c'est-à-dire à l'opposé de l'optique 14.

Le corps principal 13' présente à l'opposé de l'optique une face d'extrémité 18, qui s'étend perpendiculairement à l'axe optique 15, et en saillie de laquelle s'étend la partie de connectique. La face d'extrémité 18 forme ainsi une surface d'appui autour de la partie de connectique.

Il convient de noter que dans le contexte de l'invention, la partie de connectique 17 peut être de taille standard quelle que soit la forme et les dimensions du corps principal 13' du capteur optique.

En outre, selon l'exemple particulier illustré, le capteur optique 13 peut comprendre une pièce de liaison 16, par exemple de forme sensiblement cylindrique, disposée autour de l'extrémité arrière du capteur optique 13, autrement dit du côté opposé à l'optique 14, et plus particulièrement autour de la partie de connectique 17 agencée dans le prolongement axial du corps principal 13'. Cette pièce de liaison 16 forme un passage de câbles (non représentés) nécessaires au fonctionnement du capteur optique 13, par exemple permettant le raccordement du capteur optique 13 à une source d'alimentation électrique du capteur optique 13 et/ou permettant la transmission d'images captées par le capteur optique 13 vers au moins un moyen de traitement d'images (non représenté) du véhicule 100 (figure 1). Tel qu'illustré sur les figures, cette pièce de liaison 16 présente un fourreau de passage de câbles, à l'intérieur duquel s'étend notamment la partie de connectique 17, et une collerette susceptible de venir en appui contre la face d'extrémité 18 du corps principal 13' du capteur optique.

Selon les modes de réalisation illustrés, le capteur optique 13 est monté dans le dispositif de protection 3.

Selon l'exemple illustré sur la figure 1, le dispositif de protection 3 est monté à l'avant du véhicule 100 au niveau d'un pare-chocs. Bien entendu, en variante le dispositif de protection 3 peut être monté à l'arrière du véhicule 100, par exemple au niveau du pare-chocs ou de la plaque d'immatriculation. Il peut aussi par exemple être monté sur les côtés du véhicule, par exemple au niveau des rétroviseurs.

Le dispositif de protection 3 peut être fixé selon toute technique connue, sur tout élément 2 du véhicule 100, tel qu'un élément de carrosserie ou un élément extérieur tel qu'un pare-chocs, un rétroviseur ou une plaque d'immatriculation. À cet effet, on peut citer de façon non exhaustive un système de clips, un système de vissage, ou encore un système de collage.

En outre, le dispositif de protection 3 comporte un élément optique 9, mieux visible sur les figures 2a à 3, qui est transparent et monté mobile en rotation autour d'un axe de rotation A1. Cet élément optique 9 est configuré pour être disposé en amont de l'optique 14 du capteur optique 13 de sorte que l'axe de rotation A1 de l'élément optique 9 soit confondu avec l'axe optique 15 du capteur optique 13.

L'élément optique 9 est agencé à l'avant du dispositif de protection 3. L'avant du dispositif de protection 3 s'entend de la partie destinée à faire face à la scène de route dont le capteur optique 13 participe à la prise de vues, lorsque le dispositif de protection 3 est monté sur le véhicule 100 (figure 1).

Le dispositif de protection 3 comporte de plus un moteur 5, visible sur les figures 2a et 2b, configuré pour entrainer en rotation l'élément optique 9.

Le moteur 5 est agencé à l'arrière du dispositif de protection 3. L'arrière du dispositif de protection 3 s'entend de la partie opposée à l'avant du dispositif de protection 3 ; l'arrière du dispositif de protection 3 est donc la partie la plus éloignée de la scène de route dont le capteur optique 13 participe à la prise de vues. Autrement dit, le moteur 5 est agencé du côté opposé à l'optique 14 du capteur optique 13 et à l'élément optique 9.

Le moteur 5 est monté rotatif autour d'un axe de rotation A2. À cet effet, le moteur 5 comporte un arbre rotatif 51. En particulier, le moteur 5 comporte un stator 53 fixe et l'arbre rotatif ou rotor 51 est mobile en rotation par rapport au stator fixe 53.

Selon le mode de réalisation illustré, le rotor 51 est disposé autour du stator 53. Le stator 53 est donc intérieur et le rotor 51 extérieur.

De plus, le moteur 5 est agencé de sorte que son axe de rotation A2 est confondu avec l'axe de rotation A1 de l'élément optique 9, et avec l'axe optique 15 du capteur optique 13.

À titre d'exemple non limitatif, il peut s'agir plus particulièrement d'un moteur sans balais, aussi connu sous la dénomination « brushless motor » en anglais.

Le moteur 5 peut avoir une vitesse de rotation comprise entre 1000 et 50000 tours/minute, de préférence entre 5000 et 20000 tours/minute, et de manière encore préférée entre 7000 et 15000 tours/minute. De telles vitesses de rotation permettent l'élimination d'éventuelles salissures qui se seraient déposées sur l'élément optique 9 par effet centrifuge et permettent ainsi de maintenir l'optique 14 du capteur optique 13 propre pour assurer un fonctionnement optimisé du système d'assistance à la conduite 1.

Le moteur 5 est par exemple alimenté électriquement par une alimentation reliée au circuit électrique général du véhicule 100 (figure 1).

En se référant aux figures 2a à 4, le dispositif de protection 3 peut comporter en outre un boitier 4 avantageusement solidarisé à l'élément optique 9 et monté mobile en rotation autour de l'axe de rotation A1 de l'élément optique 9.

De préférence, le boitier 4 est un boitier étanche.

Ce boitier 4 est agencé de façon à être entrainé en rotation par le moteur 5, ce qui permet la rotation de l'élément optique 9. L'élément optique 9 est donc dans cet exemple particulier, configuré pour être entrainé en rotation avec le boitier 4, de façon à permettre un nettoyage de l'élément optique 9 par effet centrifuge.

L'élément optique 9 est configuré pour être disposé à l'avant du boitier 4. L'avant du boitier 4 s'entend de la partie du boitier 4 destinée à faire face à la scène de route dont le capteur optique 13 participe à la prise de vues, lorsque le dispositif de protection 3 est monté sur le véhicule 100 (figure 1). Par opposition, l'arrière du boitier 4, mieux visible sur les figures 2a, 2b, s'entend de la partie du boitier 4 opposée à l'avant du boitier 4 ; l'arrière du boitier 4 est donc la partie la plus éloignée de la scène de route dont le capteur optique 13 participe à la prise de vues.

De plus, le boitier 4 comporte un logement 19 (voir figure 2a) configuré pour recevoir le capteur optique 13 de sorte que l'axe optique 15 du capteur optique 13, soit confondu avec l'axe de rotation A1 de l'élément optique 9 et du boitier 4.

Ce logement 19 est également configuré pour recevoir le moteur 5. Plus précisément, le moteur 5 est agencé à l'arrière du boitier 4. Selon le mode de réalisation décrit, le moteur 5 est agencé du côté opposé à l'élément optique 9.

Le boitier 4 étant solidaire de l'élément optique 9, cela forme un bloc étanche empêchant ainsi l'introduction de salissures à l'intérieur du boitier 4 destiné à recevoir le capteur optique 13 et le moteur 5.

En outre, le moteur 5 est dans cet exemple agencé dans le prolongement du capteur optique 13. Plus précisément, le moteur 5 est creux et est configuré pour recevoir au moins en partie le capteur optique 13, et notamment pour recevoir en sa partie creuse la partie arrière du capteur optique et plus particulièrement la partie de connectique 17 qui s'étend en saillie du corps principal 13' du capteur optique. En particulier, c'est le stator 53 fixe de moteur qui est creux et peut recevoir une partie du capteur optique 13. Il s'agit ici comme précisé précédemment d'une partie arrière du capteur optique 13 du côté opposé à l'optique 14.

Lors du montage du capteur optique 13, du moteur 5 et du dispositif de protection 3, le stator 53 du moteur 5 est disposé autour du fourreau de la pièce de liaison 16 du capteur optique 13. Le stator est enfilé jusqu'à être bloqué par la présence de la collerette de la pièce de liaison. On comprend que cet agencement assure que le moteur ne soit pas disposé axialement au-delà de la face d'extrémité 18 du corps principal 13' du capteur optique 13. Quelle que soit la taille et la forme du corps principal du capteur optique, un même moteur 5 pourra être utilisé dès lors que la partie de connectique 17 et le fourreau de la pièce de liaison 16 présentent des dimensions stables d'un capteur optique à un autre. Il n'est dès lors pas nécessaire de surdimensionner les moteurs pour s'adapter aux caméras de grande taille, ce qui présente un avantage de coût et diminue le phénomène de balourd de sorte que là encore, il n'est pas nécessaire de surdimensionner les roulements associés.

En outre, le boitier 4 est solidaire de l'arbre rotatif ou rotor 51 du moteur 5.

Par ailleurs, le boitier 4 comporte une paroi 21 définissant le logement 19 pour le capteur optique 13. Cette paroi 21 est centrée autour de l'axe de rotation A1 de l'élément optique 9 et du boitier 4. Dans cet exemple, la paroi 21 est de forme générale sensiblement cylindrique, comme cela est mieux visible sur les figures 2b à 4.

Selon une première variante, la paroi 21 peut être réalisée d'une seule pièce avec l'élément optique 9.

Selon une deuxième variante, la paroi 21 et l'élément optique 9 peuvent être réalisées par deux pièces distinctes, et dans ce cas la paroi 21 est solidarisée à une extrémité à l'élément optique 9. Il s'agit en particulier de l'extrémité avant de la paroi 21 qui est solidarisée à l'élément optique 9. Comme précédemment, l'avant est défini comme la partie la plus proche de la scène de route. À titre d'exemple non limitatif, la solidarisation entre la paroi 21 et l'élément optique 9 peut se faire par soudure par ultrasons.

Ainsi, le boitier 4 et l'élément optique 9 peuvent être réalisés en une ou plusieurs pièces.

Le boitier 41, notamment la paroi 21, peut être réalisé en tout matériau approprié connu de l'homme du métier, par exemple de l'aluminium ou un polycarbonate thermo conducteur.

En outre, la paroi 21 comporte avantageusement une ouverture 21a (voir figures 2a, 2b) entourant la pièce de liaison 16 à l'arrière du capteur optique 13, lorsque le capteur optique 13 est agencé à l'intérieur du boitier 4.

En variante ou en complément, on prévoit avantageusement au moins un moyen de limitation de la condensation, appelé par la suite moyen anti-condensation. Un tel moyen anti-condensation peut être prévu au niveau du boitier 4. En particulier, au moins un moyen anti-condensation peut être agencé sur la paroi 21 du boitier 4.

À titre d'exemple non limitatif, le moyen anti-condensation peut comprendre au moins un orifice 210 traversant au niveau du boitier 4, dans cet exemple sur la paroi 21 (voir figures 2a à 3). Le ou les orifices 210 peuvent être réalisés par perçage. De préférence, lorsque plusieurs orifices 210 sont prévus, ils sont agencés de façon symétrique par rapport à l'axe de rotation A1 du boitier 4.

Selon l'exemple illustré sur la figure 2a, deux orifices 210 sont prévus, agencés de façon symétrique par rapport à l'axe de rotation A1 du boitier 4. Les orifices 210 communiquent entre l'intérieur du boitier 4 et l'extérieur du boitier 4 lorsque le dispositif de protection 3 est assemblé tel qu'illustré sur la figure 2a. À titre d'exemple non limitatif, chaque orifice 210 peut présenter un diamètre de l'ordre de 5mm.

De plus, on peut prévoir une ou plusieurs membranes 211 semi-perméables, respectivement agencées au moins au niveau d'un orifice 210 (figures 2a à 3). Selon l'exemple illustré sur la figure 2a, deux membranes 211 sont représentées de façon schématique. Chaque membrane 211 peut être fixée sur un orifice 210 associé de manière étanche, par exemple par collage ou encore par soudure par ultrasons.

Ces membranes 211 sont, selon les modes de réalisation décrits, perméables à l'air et imperméables à l'eau. La ou les membranes 211 favorisent ainsi la circulation de l'air à l'intérieur du boitier 4. Ceci permet une bonne ventilation entre l'optique 14 et l'élément optique 9 et empêche ainsi l'accumulation de condensation.

Avantageusement, on prévoit en outre au moins un moyen de compensation de la masse enlevée au niveau de l'orifice 210 ou des orifices 210. Selon l'exemple particulier illustré sur les figures 2a à 3, avec deux orifices 210 symétriques par rapport à l'axe de rotation A1 du boitier 4 (mieux visible sur la figure 2a), les deux membranes 211 sont également placées de façon symétrique par rapport à l'axe de rotation A1 du boitier 4 et c'est cet agencement symétrique qui permet de limiter les effets de masse par rapport à la force centrifuge lors de la rotation du boitier 4.

En ce qui concerne plus particulièrement l'élément optique 9, ce dernier est destiné à protéger l'optique 14 du capteur optique 13 des projections éventuelles de salissures ou débris solides qui pourraient abimer cette optique 14. Il s'agit donc d'un élément de protection, ou plus précisément d'un masque de protection du capteur optique 13, et c'est cet élément optique 9 qui est soumis aux agressions provenant de l'extérieur, c'est-à-dire aussi bien des projections d'eau, de polluants, de graviers que des dépôts de polluants ou des traces d'eau.

Cet élément optique 9 peut être réalisé en verre ou en un matériau plastique transparent tel que du polycarbonate.

L'élément optique 9 est disposé de façon centrée par rapport à l'axe de rotation A1. Cet élément optique 9 présente notamment une symétrie de révolution par rapport à l'axe de rotation A1.

À l'assemblage du dispositif de protection 3, l'élément optique 9 est agencé de façon centrée par rapport au capteur optique 13, plus précisément de façon centrée par rapport à l'optique 14.

Comme dit précédemment, l'élément optique 9, réalisé d'une seule pièce avec la paroi 21 du boitier 4 ou solidarisé à une extrémité de cette paroi 21, est agencé à l'avant du dispositif de protection 3, dans cet exemple à l'avant du boitier 4.

Selon une variante, l'élément optique 9 est distinct du capteur optique 13. Dans ce cas, l'élément optique 9 est destiné à être disposé en amont du capteur optique 13, plus précisément en amont de l'optique 14. Dans la présente, le terme amont est défini par rapport à l'axe optique 15 et par rapport à la scène de route dont le capteur optique 13 participe à la prise de vues. Autrement dit, on comprend par « en amont » de l'optique 14, une position dans laquelle l'élément optique 9 est disposé entre l'optique 14 et la scène de route dont le capteur optique 13 participe à la prise de vues, selon l'axe optique 15.

Selon une autre variante, l'élément optique 9 peut être formé par une partie du capteur optique 13 telle qu'une lentille extérieure de l'optique 14 du capteur optique 13. Dans ce cas, l'élément optique 9 est également disposé en amont de l'optique 14, c'est-à-dire entre l'optique 14 et la scène de route dont le capteur optique 13 participe à la prise de vues, selon l'axe optique 15.

Selon l'une ou l'autre de ces variantes, l'élément optique 9 étant disposé en amont de l'optique 14 du capteur optique 13, sa réalisation dans un matériau transparent permet de ne pas nuire à l'efficacité du capteur optique 13.

En outre, selon l'une ou l'autre de ces variantes, en référence aux figures 1 à 3, lorsque le dispositif de protection 3 recevant le capteur optique 13 est monté sur le véhicule 100, l'optique 14 et l'élément optique 9 font saillie d'une ouverture prévue sur l'élément 2 du véhicule 100. Avec un tel agencement, le capteur optique 13 présente un grand angle de vision V délimité de façon schématique par les tirets sur la figure 2a, et l'optique 14 reste propre du fait de la présence de l'élément optique 9 entre l'optique 14 et l'extérieur du véhicule 100 (figure 1).

De plus, selon l'une ou l'autre des variantes de l'élément optique 9 distinct ou appartenant au capteur optique 13, l'élément optique 9 est dimensionné de façon à recouvrir toute la surface de l'optique 14 (voir figures 2a à 3).

À cet effet, en se référant de nouveau aux figures 2a et 2b, lorsque l'élément optique 9 est distinct du capteur optique 13, l'élément optique 9 peut présenter :
- une partie formant masque 90a destinée à être agencée en regard de l'optique 14 du capteur optique 13 et
- dans le prolongement de ce masque 90a, une partie de maintien 90b destinée à venir entourer la partie avant du capteur optique 13 présentant l'optique 14, c'est-à-dire la partie du capteur optique 13 destinée à faire face à la scène de route dont le capteur optique 13 participe à la prise de vues.

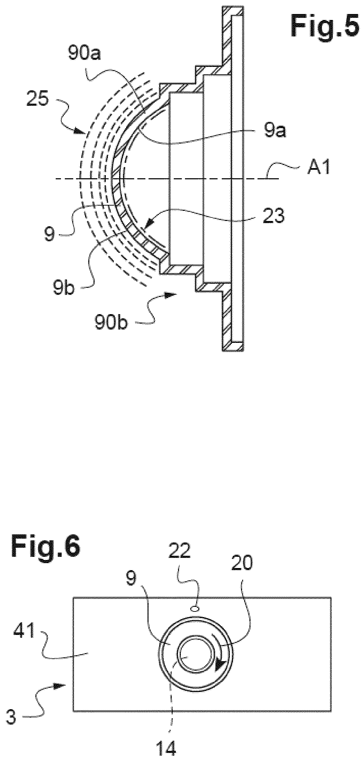

Bien entendu, la partie de maintien 90b est de forme complémentaire à la forme de la partie avant du capteur optique 13 qu'elle est destinée à entourer. Selon l'exemple illustré, cette partie de maintien 90b peut présenter une forme sensiblement étagée qui prolonge la partie formant masque 90a de l'élément optique 9. Cette forme étagée de l'élément optique 9 est mieux visible sur les figures 2a, 2b et 5. En outre, la partie de maintien 90b de l'élément optique 9 est la partie qui est fixée à l'extrémité avant de la paroi 21 du boitier 4 (voir figures 2a, 2b), lorsque l'élément optique 9 n'est pas réalisé d'une seule pièce avec cette paroi 21.

Avantageusement, l'élément optique 9 présente une forme générale sensiblement similaire à la forme de l'optique 14. Dans cet exemple, l'élément optique 9 est au moins en partie de forme sensiblement convexe, avec une courbe sensiblement parallèle à la surface courbée de l'optique 14 du capteur optique 13. Cette partie convexe de l'élément optique 9 présente par exemple un diamètre proche de celui de l'optique 14 du capteur optique 13. Selon l'exemple illustré, c'est la partie formant masque 90a, destinée à être agencée directement en regard de l'optique 14 du capteur optique 13, qui présente cette forme sensiblement convexe.

Selon une alternative non représentée ici, l'élément optique 9, lorsqu'il est distinct du capteur optique 13, peut être au moins en partie sensiblement plan.

Ainsi, l'optique 14 est protégée des projections éventuelles de salissures telles que des polluants organiques ou minéraux, de l'eau ou encore une combinaison de ces différents éléments, pouvant l'endommager. De plus, lors de l'entrainement en rotation du boitier 4 et de l'élément optique 9, la force centrifuge que les éventuelles salissures subissent est supérieure à l'adhérence de ces salissures sur l'élément optique 9. Ainsi, les éventuelles salissures déposées sur la surface externe de l'élément optique 9 sont éjectées de l'élément optique 9 et ne perturbent pas le champ de vision V du capteur optique 13.

En outre, afin d'éviter un phénomène de condensation entre l'optique 14 et l'élément optique 9, la surface interne 9a de l'élément optique 9 (voir figure 5) a avantageusement une propriété antibuée. La surface interne 9a de l'élément optique 9 est la surface destinée à être agencée en regard de l'optique 14 du capteur optique 13. En particulier la surface interne 9a de l'élément optique 9 présente un revêtement antibuée, représenté de façon schématique par une ligne 23 en arc de cercle avec pointillés et tirets en alternance.

En variante ou en complément, la surface externe 9b de l'élément optique 9 peut présenter une ou plusieurs des propriétés suivantes : hydrophobe, filtre infra-rouge, photocatalytique, super hydrophobe, lipophobe, hydrophile, ou encore super hydrophile, résistance aux gravillons, ou encore tout autre traitement de surface permettant de réduire l'adhésion des salissures.

En particulier, grâce aux propriétés hydrophobes de la surface externe 9b de l'élément optique 9, des gouttes d'eau éventuelles ruissèleront sur la surface externe 9b sans laisser de traces car l'eau ne pourra pas adhérer sur cette surface externe 9b.

Ainsi, les couches ou revêtements sur la surface externe 9b l'élément optique 9, représentées de façon schématique par les secteurs circulaires 25 en tirets sur la figure 5, permettent de limiter les possibilités d'adhérence des polluants organiques ou minéraux ainsi que la présence de traces d'eau sur l'élément optique 9 pouvant nuire au bon fonctionnement du système d'assistance à la conduite 1. Avantageusement, une solution liquide, telle qu'une solution de type Rain-X^{®}, peut être déposée, par exemple de manière périodique et manuelle, sur la surface externe 9b de l'élément optique 9 afin de former une pellicule hydrophobe.

Ces exemples de réalisation sont fournis à titre illustratif et non limitatif. Par exemple, l'Homme du métier peut utiliser un élément optique 9 transparent présentant une surface externe 9b ayant d'autres propriétés permettant de limiter l'adhérence des salissures sur cette surface externe 9b sans sortir du cadre de la présente invention.

De manière optionnelle, l'élément optique 9 du dispositif de protection 3 peut également comprendre un système de dégivrage ou de désembuage intégré pour pouvoir garantir une bonne opérabilité du système d'assistance à la conduite 1 quelles que soient les conditions météorologiques, comme un filament ou une résistance de dégivrage par exemple.

De plus, en se référant de nouveau aux figures 1 à 4, l'élément optique 9, et plus généralement l'ensemble du dispositif de protection 3 peut être monté sur l'élément 2 prévu sur le véhicule 100 par l'intermédiaire d'un moyen de maintien et de fixation, par exemple comprenant une plaque de fixation 41 et un support de fixation 46. Après assemblage du dispositif de protection 3, le support de fixation 46 peut être solidarisé à la plaque de fixation 41 par tout moyen approprié, par exemple de façon non limitative par soudage, vissage ou encore collage. La plaque de fixation 41 peut par exemple être fixée par tout moyen à un élément 2 tel qu'un élément de carrosserie du véhicule 100 (figure 1).

En se référant de nouveau aux figures 2a à 4, la plaque de fixation 41 est agencée à l'avant du dispositif de protection 3. Cette plaque de fixation 41 présente une ouverture 45 (figures 2a à 3) pour le passage de l'élément optique 9 et de l'optique 14 du capteur optique 13, pour permettre ainsi la vision vers l'extérieur. Cette ouverture 45 est par exemple prévue de façon à être agencée en regard d'une ouverture complémentaire de l'élément 2 du véhicule 100, de sorte qu'une fois le moyen de maintien et de fixation 41, 46 installé sur l'élément 2 du véhicule 100, l'optique 14 du capteur optique 13 et l'élément optique 9 font saillie de l'ouverture 45 de la plaque de fixation 41 et de l'ouverture présente dans l'élément 2 du véhicule 100 (voir figures 1 à 3).

Le support de fixation 46 présente dans cet exemple une forme sensiblement en « U » ou une forme d'étrier, avec deux branches sensiblement parallèles et opposées 46a, qui s'étendent de part et d'autre du boitier 4 et reliées par une base 46b. La base 46b est située à l'arrière du dispositif de protection 3, ici du côté opposé à la plaque de fixation 41.

Le support de fixation 46 comporte avantageusement une ouverture 47, mieux visible sur les figures 2a, 2b et 4, pour le passage de la pièce de liaison 16 à l'arrière du capteur optique 13, de façon à permettre le raccordement du capteur optique 13 aux câbles (non représentés) nécessaires au fonctionnement du capteur optique 13. Cette ouverture 47 est prévue à l'arrière du dispositif de protection 3, au niveau de la base 46b du support de fixation 46 par exemple sensiblement au centre.

Avantageusement, on prévoit un agencement étanche à l'arrière du boitier 4 pour le passage des câbles ou fils afin de limiter l'entrée de vapeur d'eau et/ou autres contaminants dans le boitier 4. En particulier, l'ouverture 47 pour le passage de la pièce de liaison 16 permettant le raccordement du capteur optique 13 aux des câbles ou fils est protégée de manière étanche afin de limiter l'entrée de vapeur d'eau et/ou autres contaminants dans le boitier 4.

En outre, le dispositif de protection 3 peut comprendre en particulier un ou plusieurs roulements 27, 28 représentés de façon schématique sur la figure 2a. Les roulements 27, 28 sont de forme générale sensiblement annulaire.

Selon l'exemple représenté sur la figure 2a, le dispositif de protection 3 comprend deux roulements 27, 28. Un premier roulement 27, permettant la rotation du boitier 4 par rapport à la plaque de fixation 41, est disposé à l'extérieur du boitier 4, entre l'élément optique 9 et la plaque de fixation 41. Un deuxième roulement 28, permettant la rotation du boitier 4 par rapport au stator fixe 53 du moteur, est disposé entre le rotor 51 et le stator 53.

Par ailleurs, en se référant à la figure 6, afin d'améliorer l'état de propreté de l'élément optique 9, selon une alternative optionnelle, le dispositif de protection 3 peut comprendre en outre au moins une buse 22 de projection d'un fluide, notamment de nettoyage et/ou de séchage, sur l'élément optique 9. Cette buse 22 peut être située au-dessus de l'élément optique 9, par exemple sur la plaque de fixation 41. Selon d'autres modes de réalisation non représentés ici, la buse 22 peut se situer à n'importe quel endroit à proximité de l'élément optique 9.

Le fluide projeté par la buse 22 peut être de l'air comprimé ou un liquide de nettoyage afin d'assurer le nettoyage de l'élément optique 9 si la mise en rotation de celui-ci n'est pas suffisante pour éliminer les différentes salissures qui se sont déposées sur celui-ci. Alternativement, la projection de fluide peut être utilisée de manière complémentaire à la rotation de l'élément optique 9 afin d'assurer un état de propreté optimisé de celui-ci. Sur la figure 6, la flèche 20 illustre le sens de rotation de l'élément optique 9, par exemple dans le sens horaire. Bien entendu, cette rotation peut tout à fait s'effectuer dans le sens antihoraire selon un autre mode de réalisation non représenté ici.

Par ailleurs, selon d'autres modes de réalisation non représentés ici, le dispositif de protection 3 peut comprendre plusieurs buses 22. Le dispositif de protection 3 peut par exemple comprendre une première buse 22 configurée pour projeter un premier fluide tel que du liquide de nettoyage, et une deuxième buse configurée pour projeter un deuxième fluide tel que de l'air comprimé, sur l'élément optique 9.

La ou les buses 22 peuvent être reliées au système de distribution du liquide de nettoyage du véhicule 100 (figure 1). En alternative, le dispositif de protection 3 peut comprendre un réservoir de liquide de nettoyage qui lui est propre. Dans ce cas, il est possible d'installer ce système d'assistance à la conduite 1 relativement aisément à l'intérieur de tout élément 2 du véhicule 100, tel qu'un élément de carrosserie ou sur tout élément extérieur du véhicule 100, comme par exemple les pare-chocs avant ou arrière ou encore les rétroviseurs, sans nécessiter une conception initiale longue et complexe au niveau du véhicule 100 pour raccorder le dispositif de protection 3 au système de liquide de nettoyage du véhicule 100 de manière à alimenter la buse 22 (figure 6).

De manière optionnelle, le dispositif de protection 3 peut également comporter des éléments permettant de limiter les éventuelles nuisances sonores du moteur 5 afin de ne pas incommoder les occupants à l'intérieur du véhicule 100 ou encore les autres utilisateurs lors de l'utilisation du dispositif de protection 3 du fait des hautes vitesses de rotation du moteur 5.

Par ailleurs, le dispositif de protection 3 tel que décrit précédemment en référence à l'ensemble des figures, peut être mis en oeuvre selon un procédé de nettoyage de l'élément optique 9 d'un tel dispositif de protection 3. Le procédé de nettoyage vise notamment à éliminer, par effet centrifuge, d'éventuels dépôts sur l'élément optique 9, en particulier sur la partie formant masque 90a de l'élément optique 9, lors de la rotation de l'élément optique 9. Bien entendu, afin de pouvoir nettoyer par effet centrifuge, l'élément optique 9 est entrainé en rotation, par exemple par l'intermédiaire du boitier 4, selon une vitesse de rotation non nulle

À cet effet, en référence aux figures 1 à 2b, le système d'assistance à la conduite 1 peut comprendre en outre une unité électronique de contrôle, non-représentée ici, notamment configurée pour activer le moteur 5 afin de mettre en rotation l'élément optique 9, par exemple par l'intermédiaire du boitier 4.

Selon un exemple de réalisation du procédé de nettoyage, le moteur 5 peut être activé, par exemple, par l'unité électronique de contrôle, de telle sorte que le boitier 4 et l'élément optique 9 soient entrainés en rotation de manière permanente pendant le fonctionnement du véhicule 100, c'est-à-dire pendant les phases de roulage ou à l'arrêt avec le contact.

Selon un autre mode de réalisation du procédé de nettoyage, le moteur 5 peut être activé, par exemple par l'unité électronique de contrôle, afin de mettre en rotation le boitier 4 et l'élément optique 9 de manière intermittente lors du fonctionnement du véhicule 100. Selon ce mode de réalisation, l'unité électronique de contrôle peut, par exemple, commander la mise en marche du moteur 5 lorsque l'utilisateur du véhicule utilise une fonctionnalité du véhicule nécessitant la mise en oeuvre du capteur optique 13, comme par exemple lorsqu'il passe la marche arrière quand le système d'assistance à la conduite 1 est installé pour permettre une vue à l'arrière du véhicule de façon à faciliter le stationnement de celui-ci.

Avantageusement, la vitesse de rotation de l'élément optique 9 peut être adaptée durant le procédé de nettoyage. Par exemple, l'unité électronique de contrôle est configurée pour contrôler le moteur 5 afin d'adapter la vitesse de rotation selon la vitesse de déplacement du véhicule 100. En effet, les salissures sont éliminées de l'élément optique 9 grâce à l'action de la force centrifuge liée à la rotation du boitier 4 et de l'élément optique 9, et éventuellement combinée aux frottements liés au déplacement du véhicule 100, en particulier lorsque le système d'assistance à la conduite 1 se trouve à l'avant du véhicule 100. Ainsi, plus la vitesse de déplacement du véhicule 100 est élevée, moins la vitesse de rotation du boitier 4 et de l'élément optique 9 a besoin d'être élevée pour conserver un bon état de propreté de l'élément optique 9 et donc un fonctionnement optimisé du capteur optique 13. Ainsi, l'unité électronique de contrôle peut être configurée pour agir sur le moteur 5 afin qu'il diminue la vitesse de rotation du boitier 4 lorsque la vitesse du véhicule 100 augmente, notamment lorsque l'élément optique 9 est installé à l'avant du véhicule.

Selon un mode de réalisation particulier, l'unité électronique de contrôle est configurée pour induire un changement du sens de rotation de l'élément optique 9. Avantageusement, l'unité électronique de contrôle peut modifier le sens de rotation de l'élément optique 9 à plusieurs reprises sur un laps de temps prédéfini, relativement rapide. Cette modification du sens de rotation favorise l'apparition de phénomènes d'accélérations et permet d'éliminer de manière efficace d'éventuelles petites gouttes d'eau qui se trouveraient sensiblement au centre de l'élément optique 9 par exemple. En effet, la variation du sens de rotation de l'élément optique 9 va soumettre les salissures à une accélération dans le sens inverse à leur déplacement ce qui va faciliter leur perte d'adhérence sur l'élément optique 9 est donc leur éjection de celui-ci.

Le procédé de nettoyage peut également comprendre au moins une étape de projection d'au moins un fluide sur l'élément optique 13. Cette étape de projection peut être déclenchée par exemple après détection de salissures dans le champ de vision V du capteur optique 13, et/ou en fonction de la vitesse du véhicule 100 et/ou selon une temporisation.

Par exemple, l'unité électronique de contrôle peut également être configurée pour déclencher la projection d'au moins un fluide, comme par exemple de l'air comprimé ou du liquide de nettoyage, sur l'élément optique 9 à l'aide de la buse 22 lorsque le capteur optique 13 détecte la présence de salissures au niveau de son champ de vision V par exemple.

Selon un mode de réalisation particulier, l'unité électronique de contrôle peut être configurée pour déclencher la projection d'air comprimé sur l'élément optique 9 lorsque le véhicule 100 se trouve à l'arrêt ou lorsqu'il se déplace à faible allure, c'est-à-dire par exemple à une vitesse inférieure à 15 km/h. En effet, dans un tel cas, les forces aérodynamiques peuvent ne pas être suffisantes pour être couplées de manière efficace à la force centrifuge de la rotation du boitier 4 et de l'élément optique 9 afin d'éliminer les gouttes d'eau et/ou les salissures qui peuvent se déposer sur l'élément optique 9. En particulier, à faible allure ou lorsque le véhicule se trouve à l'arrêt les petites gouttes d'eau situées au centre ou à proximité du centre de l'élément optique 9 peuvent être difficiles à éliminer car la vitesse de rotation du centre de l'élément optique 9 peut être trop faible pour les éjecter. Avantageusement, la projection d'air comprimé sur l'élément optique 9 peut permettre de compenser l'absence de forces aérodynamiques lorsque le véhicule 100 se déplace à faible allure ou lorsqu'il est à l'arrêt.

Selon un autre mode de réalisation, l'unité électronique de contrôle peut être configurée pour déclencher la projection de liquide de nettoyage et/ou d'air comprimé au bout d'une certaine durée de roulage du véhicule 100.

Selon encore un autre mode de réalisation, l'unité électronique de contrôle peut être configurée pour déclencher la projection de liquide de nettoyage et/ou d'air comprimé sur commande de l'utilisateur du véhicule.

Le procédé de nettoyage peut également comprendre des étapes de projection consécutives de fluides différents. L'unité électronique de contrôle peut être configurée, selon certains modes de réalisation, pour déclencher la projection de liquide de nettoyage et d'air comprimé de manière consécutive.

Selon un mode de réalisation particulier du procédé de nettoyage, lorsque le capteur optique 13 détecte la présence de salissures dans son champ de vision V malgré l'effet centrifuge, l'unité de contrôle peut commander l'arrêt du moteur 5 afin d'arrêter la rotation du boitier 4 et de l'élément optique 9. L'unité électronique de contrôle peut commander ensuite la projection de liquide de nettoyage par la buse 22 de manière à décoller la salissure par exemple. L'unité électronique de contrôle peut commander ensuite la projection d'air comprimé par cette même buse 22 ou par une deuxième buse non représentée ici afin d'enlever les salissures qui se seraient incrustées sur l'élément optique 9. L'unité électronique de contrôle peut réactiver ensuite le moteur 5 pour mettre de nouveau en rotation le boitier 4 et l'élément optique 9 à une vitesse de rotation différente que la vitesse de rotation initiale. La projection d'air comprimé peut être réalisée de manière antérieure, simultanée, ou encore postérieure à la reprise de la rotation du boitier 4 et de l'élément optique 9 selon ce mode de réalisation.

En variante ou en complément, le procédé de nettoyage peut comporter au moins deux étapes de nettoyage, chacune avec une vitesse de rotation de l'élément optique 9 différente. À titre d'exemple non limitatif, on peut prévoir :
- une première étape de projection de fluide de nettoyage sur l'élément optique 9, en particulier sur la partie formant masque 90a, durant laquelle l'élément optique 9 est entrainé en rotation selon une première vitesse de rotation, et
- une deuxième étape de séchage, durant laquelle l'élément optique 9 est entrainé en rotation selon une deuxième vitesse de rotation différente de la première vitesse de rotation.

La première vitesse de rotation est dans cet exemple avantageusement inférieure à la deuxième vitesse de rotation.

Le déclenchement de la deuxième étape de séchage peut être temporisé.

Ainsi, en particulier, lorsque l'on projette ou applique un fluide tel que du liquide de nettoyage sur l'élément optique 9, la vitesse de rotation peut être relativement faible, voire ralentie si l'élément optique 9 était déjà entrainé en rotation. Ceci permet de faciliter l'étalement du liquide de nettoyage. Après un laps de temps prédéfini, par exemple relativement court pour correspondre au temps nécessaire afin d'étaler le liquide de nettoyage, la vitesse de rotation est accélérée, permettant de sécher la surface externe 9b (voir figure 5) de l'élément optique 9, en particulier de la partie formant masque 90a, et également de favoriser l'élimination des salissures mouillées par le liquide de nettoyage.

Avantageusement, avec un tel mode de réalisation la quantité de fluide pour nettoyer est nettement inférieure à un système de nettoyage classique de l'art antérieur sans rotation.

Par ailleurs, le dispositif de protection 3 peut comprendre en outre et de façon optionnelle, un moyen de détection (non représenté) configuré pour détecter l'approche d'un objet à proximité de l'élément optique 9. Avantageusement, le dispositif de protection 3 comprend un capteur de proximité, non représenté ici, relié à l'unité électronique de contrôle. Un tel capteur de proximité peut par exemple être un capteur capacitif de proximité.

Le système d'assistance à la conduite 1 peut comprendre un moyen d'inhibition (non représenté) de la rotation du boitier 4 et de l'élément optique 9 à détection de l'approche d'un objet à proximité de l'élément optique 9. À titre d'exemple, le capteur capacitif de proximité peut être configuré pour transmettre une information de détection de l'approche d'un objet à l'unité électronique de contrôle, et cette dernière peut comporter un ou plusieurs moyens de traitement pour recevoir cette information et commander l'arrêt automatique du moteur 5 afin de stopper la rotation du boitier 4 et de l'élément optique 9. Ainsi, on limite le risque que l'élément optique 9 soit endommagé s'il se trouve en contact avec un objet du fait de sa rotation, en particulier lorsque le système d'assistance à la conduite 1 est destiné à être installé au niveau des pare-chocs avant ou arrière du véhicule 100.

Ainsi, on obtient un champ de vision V pour le capteur optique 13 qui est toujours dégagé et propre. En effet, en fonctionnement, le moteur 5 entraine en rotation l'élément optique 9, par rapport au capteur optique 13, par exemple par l'intermédiaire du boitier 4. Cette mise en rotation est possible notamment grâce à l'agencement d'une partie du capteur optique 13 dans le stator fixe 53 du moteur 5 et à la liaison entre l'arbre rotatif 51 du moteur 5 à l'élément optique 9 par exemple par l'intermédiaire du boitier 4. La rotation de l'élément optique 9 assure l'élimination des salissures du fait de la force centrifuge que ces dernières subissent.

En outre, le fait que l'axe de rotation A1 de l'élément optique 9 soit confondu avec l'axe optique 15 du capteur optique 13 permet d'adapter ce système à tout type de capteur optique 13 destiné à être intégré dans un véhicule 100, tout en conservant un grand angle de vision.

## Revendications

1. Dispositif de protection (3) d'un capteur optique (13) pour véhicule automobile (100), le dispositif de protection (3) comportant :
- un élément optique (9) transparent monté mobile en rotation autour d'un axe de rotation (A1), ledit élément optique (9) étant configuré pour être disposé en amont d'une optique (14) du capteur optique (13) de sorte que l'axe de rotation (A1) dudit élément optique (9) soit confondu avec l'axe optique (15) du capteur optique (13), et
- un moteur (5) comprenant un arbre rotatif (51) configuré pour tourner autour d'un axe de rotation (A2), le moteur (5) étant configuré pour entrainer en rotation ledit élément optique (9) tel que l'axe de rotation (A1) dudit élément optique (9) est en outre confondu avec l'axe de rotation (A2) de l'arbre rotatif (51) du moteur (5),
le dispositif de protection (3) est **caractérisé en ce que** le moteur (5) est agencé du côté opposé audit élément optique (9).

2. Dispositif de protection (3) selon la revendication précédente, dans lequel le moteur (5) est creux et est configuré pour recevoir au moins en partie le capteur optique (13).

3. Dispositif de protection (3) selon la revendication précédente, dans lequel le moteur (5) est configuré pour recevoir dans sa partie creuse une partie arrière du capteur optique (13).

4. Dispositif de protection (3) selon l'une quelconque des revendications précédentes, dans lequel ledit élément optique (9) est agencé à l'avant du dispositif de protection (3) de façon à faire face à une scène de route dont le capteur optique (13) est configuré pour participer à la prise de vues.

5. Dispositif de protection (3) selon l'une quelconque des revendications précédentes, dans lequel ledit élément optique (9) est disposé de façon centrée par rapport à son axe de rotation (A1).

6. Dispositif de protection (3) selon l'une quelconque des revendications précédentes, dans lequel ledit élément optique (9) est distinct du capteur optique (13).

7. Dispositif de protection (3) selon l'une quelconque des revendications précédentes, comportant un boitier (4) présentant un logement (19) configuré pour recevoir le capteur optique (13).

8. Dispositif de protection (3) selon la revendication précédente, dans lequel le boitier (4) est solidaire de l'arbre rotatif (51) du moteur (5).

9. Dispositif de protection (3) selon l'une des revendications 7 ou 8, dans lequel le logement (19) est défini par une paroi (21) du boitier (4).

10. Dispositif de protection (3) selon l'une quelconque des revendications précédentes, comprenant une plaque de fixation (41) et un roulement (27) de forme générale sensiblement annulaire disposé entre ledit élément optique (9) et la plaque de fixation (41).

11. Dispositif de protection (3) selon l'une quelconque des revendications précédentes, dans lequel ledit élément optique (9) présente une surface interne (9a) ayant une propriété antibuée, en particulier la surface interne (9a) dudit élément optique (9) présente un revêtement antibuée (23).

12. Dispositif de protection (3) selon l'une quelconque des revendications précédentes, dans lequel ledit élément optique (9) présente une surface externe (9b) ayant au moins une propriété choisie dans la liste suivante : filtre infra-rouge, photocatalytique, hydrophobe, super hydrophobe, lipophobe, hydrophile, super hydrophile, résistance aux gravillons.

13. Système d'assistance à la conduite (1) comprenant un capteur optique (13) **caractérisé en ce qu'**il comporte en outre un dispositif de protection (3) du capteur optique (13) selon l'une quelconque des revendications précédentes.

14. Procédé de nettoyage d'un élément optique (9) d'un dispositif de protection (3 ; 103) selon l'une quelconque des revendications 1 à 12, ledit procédé comprenant au moins une étape d'entrainement en rotation dudit élément optique (9) pour un nettoyage dudit élément optique (9) par effet centrifuge, notamment au moins deux étapes de nettoyage avec une vitesse de rotation dudit élément optique (9) différente pour chaque étape.

## Patentansprüche

1. Vorrichtung (3) zum Schutz eines optischen Sensors (13) für ein Kraftfahrzeug (100), wobei die Vorrichtung (3) zum Schutz umfasst:
Die Schutzvorrichtung (3) umfasst:
- ein transparentes optisches Element (9), das um eine Drehachse (A1) drehbar gelagert ist, wobei das optische Element (9) so ausgestaltet ist, dass es stromaufwärts von einer optischen Einheit (14) des optischen Sensors (13) angeordnet ist, so dass die Drehachse (A1) des optischen Elements (9) mit der optischen Achse (15) des optischen Sensors (13) zusammenfällt, und
- einen Motor (5) mit einer Drehwelle (51), die so konfiguriert ist, dass sie sich um eine Drehachse (A2) dreht, wobei der Motor (5) so konfiguriert ist, dass er das optische Element (9) so dreht, dass die Drehachse (A1) des optischen Elements (9) ferner mit der Drehachse (A2) der Drehwelle (51) des Motors (5) zusammenfällt
die Schutzvorrichtung **dadurch gekennzeichnet ist, dass** der Motor (5) auf der dem optischen Element (9) gegenüberliegenden Seite angeordnet ist.

2. Schutzvorrichtung (3) nach dem vorhergehenden Anspruch, bei der der Motor (5) hohl ist und zur zumindest teilweisen Aufnahme des optischen Sensors (13) ausgebildet ist.

3. Schutzvorrichtung (3) nach dem vorhergehenden Anspruch, bei der der Motor (5) so gestaltet ist, dass er in seinem hohlen Teil einen hinteren Teil des optischen Sensors (13) aufnimmt.

4. Schutzvorrichtung (3) nach einem der vorhergehenden Ansprüche, bei der das optische Element (9) an der Vorderseite der Schutzvorrichtung (3) so angeordnet ist, dass es einer Straßenszene zugewandt ist, von der der optische Sensor (13) so konfiguriert ist, dass er an der Aufnahme von Bildern teilnimmt.

5. Schutzvorrichtung (3) nach einem der vorhergehenden Ansprüche, bei der das optische Element (9) in Bezug auf seine Drehachse (A1) zentriert angeordnet ist.

6. Schutzvorrichtung (3) nach einem der vorhergehenden Ansprüche, bei der das optische Element (9) von dem optischen Sensor (13) verschieden ist.

7. Schutzvorrichtung (3) nach einem der vorhergehenden Ansprüche, mit einem Gehäuse (4), das ein zur Aufnahme des optischen Sensors (13) ausgebildetes Gehäuse (19) aufweist.

8. Schutzvorrichtung (3) nach dem vorhergehenden Anspruch, bei der das Gehäuse (4) mit der Drehwelle (51) des Motors (5) verbunden ist.

9. Schutzvorrichtung (3) nach Anspruch7 oder 8, bei der das Gehäuse (19) durch eine Wand (21) des Gehäuses (4) begrenzt ist.

10. Schutzvorrichtung (3) nach einem der vorhergehenden Ansprüche, mit einer Befestigungsplatte (41) und einem Lager (27) von im Wesentlichen ringförmiger Form, das zwischen dem optischen Element (9) und der Befestigungsplatte (41) angeordnet ist.

11. Schutzvorrichtung (3) nach einem der vorhergehenden Ansprüche, bei der das optische Element (9) eine Innenfläche (9a) mit einer Antimist-Eigenschaft aufweist, insbesondere die Innenfläche (9a) des optischen Elements (9) eine Antimist-Beschichtung (23) aufweist.

12. Schutzvorrichtung (3) nach einem der vorhergehenden Ansprüche, bei der das optische Element (9) eine äußere Oberfläche (9b) mit mindestens einer Eigenschaft aufweist, die aus der folgenden Liste ausgewählt ist: Infrarotfilter, photokatalytisch, hydrophob, superhydrophob, lipophob, hydrophil, superhydrophil, kiesresistent.

13. Fahrerassistenzsystem (1) mit einem optischen Sensor (13), **dadurch gekennzeichnet, dass** es ferner eine Vorrichtung (3) zum Schutz des optischen Sensors (13) nach einem der vorhergehenden Ansprüche aufweist.

14. Verfahren zum Reinigen eines optischen Elements (9) einer Schutzvorrichtung (3; 103) nach einem der Ansprüche 1 bis12, wobei das Verfahren mindestens einen Schritt des Drehens des optischen Elements (9) zum Reinigen des optischen Elements (9) durch Zentrifugeneffekt, insbesondere mindestens zwei Reinigungsschritte mit einer unterschiedlichen Drehgeschwindigkeit des optischen Elements (9) für jeden Schritt, umfasst.

## Claims

1. A device (3) for protecting an optical sensor (13) for motor vehicle (100), the device (3) for protection comprising:
the protection device (3) comprising:
- a transparent optical element (9) mounted rotably movable about an axis of rotation (A1), said optical element (9) being configured to be arranged upstream from an optical unit (14) of the optical sensor (13) such that the axis of rotation (A1) of said optical element (9) coincides with the optical axis (15) of the optical sensor (13), and
- a motor (5) comprising a rotary shaft (51) configured to rotate about an axis of rotation (A2), the motor (5) being configured to rotate said optical element (9) such that the axis of rotation (A1) of said optical element (9) further coincides with the axis of rotation (A2) of the rotary shaft (51) of the motor (5
the protection device is **characterized in that** the motor (5) is arranged on the opposite side to said optical element (9).

2. The protection device (3) as claimed in the preceding claim, in which the motor (5) is hollow and is configured to accommodate the optical sensor (13) at least partially.

3. The protection device (3) as claimed in the preceding claim, in which the motor (5) is configured to accommodate in its hollow part a rear part of the optical sensor (13).

4. The protection device (3) as claimed in any one of the preceding claims, in which said optical element (9) is arranged at the front of the protection device (3) so as to face a road scene, of which the optical sensor (13) is configured to participate in taking images.

5. The protection device (3) as claimed in any one of the preceding claims, in which said optical element (9) is disposed in a centered way with respect to its axis of rotation (A1).

6. The protection device (3) as claimed in any one of the preceding claims, in which said optical element (9) is distinct from the optical sensor (13).

7. The protection device (3) as claimed in any one of the preceding claims, including a casing (4) having a housing (19) configured to accommodate the optical sensor (13).

8. The protection device (3) as claimed in the preceding claim, in which the casing (4) is integral with the rotary shaft (51) of the motor (5).

9. The protection device (3) as claimed in either claim 7 or 8, in which the housing (19) is defined by a wall (21) of the casing (4).

10. The protection device (3) as claimed in any one of the preceding claims, comprising a fastening plate (41) and a bearing (27) of substantially annular general shape disposed between said optical element (9) and the fastening plate (41).

11. The protection device (3) as claimed in any one of the preceding claims, in which said optical element (9) has an inner surface (9a) having an antimist property, in particular the inner surface (9a) of said optical element (9) has an antimist coating (23).

12. The protection device (3) as claimed in any one of the preceding claims, in which said optical element (9) has an outer surface (9b) having at least one property chosen from the following list: infrared filter, photocatalytic, hydrophobic, super hydrophobic, lipophobic, hydrophilic, super hydrophilic, resistant to gravel.

13. A driver assistance system (1) comprising an optical sensor (13), **characterized in that** it furthermore includes a device (3) for protecting the optical sensor (13) as claimed in any one of the preceding claims.

14. A method for cleaning an optical element (9) of a protection device (3; 103) as claimed in any one of claims 1 to 12, said method comprising at least one step of rotating said optical element (9) for cleaning said optical element (9) by centrifuge effect, in particular at least two cleaning steps with a different speed of rotation of said optical element (9) for each step.
